# EUROPÄISCHE PATENTSCHRIFT

(11) **EP 0 560 356 B1**
(45) Veröffentlichungstag und Bekanntmachung des Hinweises auf die Patenterteilung: **29.05.1996**
(21) Anmeldenummer: 93103932.5
(22) Anmeldetag: 11.03.1993
(51) Int. Cl.: G06K 9/24

(54) **Vorrichtung zum Prüfen von Schriften**
Apparatus for checking writing
Dispositif de vérification d'écritures

(30) Priorität: 13.03.1992 DE 9203286 U; 03.06.1992 DE 9207481 U
(43) Veröffentlichungstag der Anmeldung: 15.09.1993
(73) Patentinhaber: Baltus, René, D-53125 Bonn (DE)
(72) Erfinder: Baltus, René, D-53125 Bonn (DE)
(74) Vertreter: COHAUSZ HASE DAWIDOWICZ & PARTNER

(56) Entgegenhaltungen:
- WO-A-91/09377
- PROC. OF THE 1988 INT. CARNAHAN CONF. ON SECURITY TECHNOLOGY: CRIME COUNTERMEASURES 5. Oktober 1988 Seiten 5 - 8 XP000092872 P. DE BRUYNE 'Dynamic signature verification using your own pen'

## Beschreibung

Es sind verschiedene Schriftprüfer bekannt, die zum Beispiel Anwendung im Bankenbereich zur Prüfung der Unterschriften unter Schecks, Überweisungsformularen und sonstigen Dokumenten finden. Diese bekannten Schriftprüfer arbeiten mit optischen Systemen. Die Prüfung kann erst erfolgen, nachdem die Unterschrift schon getätigt ist und das Formular in einem gesondert angeordneten Gerät manuell oder automatisch gebracht wird. Ein sofortiger Vergleich der früher getätigten Schriften mit der aktuellen Schrift ist nicht möglich. Die Prüfung erfolgt in zwei Dimensionen: Länge und Breite der gesamten Unterschrift und der einzelnen Striche sowie die Verhältnisse von Höhe zur Breite der einzelnen Linien und Buchstaben zueinander.

Aus den US-Patentschriften 4 131 880 und 4 111 052 ist es bekannt, zum Erkennen einer Unterschrift einen Drucksensor im Schreibstift anzuordnen. Der Benutzer kann damit nicht mehr sein eigenes Schreibinstrument benutzen. Auch ist der Schreibstift mit Drucksensor Beschädigungen und Vandalismus ausgesetzt, so daß er in öffentlichen Bereichen nicht verwendet werden kann.

Aus der US 4697049 ist es an sich bekannt beim Drücken auf eine Bedienungsplatte die X-Y-Koordinaten des Druckpunktes zu ermitteln, um diese Druckpunkte auf einen Bildschirm zu übertragen und damit ein Computerprogramm insbesondere ein Graphikprogramm zu beeinflussen. Ferner ist aus der WO 91/09377 eine Platte bekannt, auf der eine Unterschrift getätigt werden kann, um diese zu verifizieren. Hierbei werden die tatsächlichen Drücke in X- und Y-Richtung ausgewertet. Die unterschiedliche Druckstärke des Schreibinstruments auf die Platte wird hierbei nicht erfaßt, so daß ein für die Auswertung wichtiger Bereich vernachlässigt wird.

Aufgabe der Erfindung ist es, die personentypischen und nicht veränderbaren Komponenten einer Schrift, unmittelbar auswertbar zu machen. Auch ist es Aufgabe der Erfindung, eine preiswerte Vorrichtung zu schaffen, mit einer individuellen Sensorstruktur mit einer hohen Anzahl von Sensoren zur Aufnahme und Auswertung der Kraftverläufe. Ferner soll die Erfindung punktuell auftretende Kräfte, wie sie z.B. zur manuellen Signalgebung benutzt werden, erfassen und auswerten. Auch sollen nur handelsübliche Schreibutensilien zum Einsatz kommen.

Diese Aufgabe wird erfindungsgemäß dadurch gelöst, daß (a) die Schreibfläche oder Schreibunterlage so gestaltet ist, daß über den Schreibdruck die x-y-Koordinaten des Schriftzuges erfaßt werden können, und (b) die punktuell auftretenden Kräfte, wie sie zur manuellen Signalgebung benutzt werden, erfaßt und ausgewertet werden. Somit mißt die Schreibfläche oder Schreibunterlage auch den Schreibdruck und die Schreibdruckänderungen, die zum Teil unsichtbar sind. Auch wird eine sofortige Auswertung der Schrift in hoher Genauigkeit möglich. Hierbei kann eine Platte so auf Wägezellen oder Kraftaufnehmern gelagert oder mit Dehnungsstreifen versehen werden, daß die beim Schreiben entstehenden dreidimensionalen Kräfte und Drücke von den Wägezellen-Kraftaufnehmern oder den Dehnungsmeßstreifen in auswertbare elektronische Signale umwandelbar sind.

Durch eine nachgeschaltete Elektronik sind die Signale auf Datenträger übertragbar und bei erneutem Gebrauch vergleichbar. Stimmen die aktuellen Signale mit den gespeicherten überein, sind weitere Funktionen auslösbar; ist dies nicht der Fall, sind Funktionen sperrbar.

Vorteilhafte Ausgestaltungen der Erfindung sind in den Unteransprüchen aufgeführt.

Ausführungsbeispiele der Erfindung sind in den Zeichnungen dargestellt und werden im folgenden näher beschrieben. Es zeigen:
- Figur 1:: Eine Seitenansicht eines ersten Ausführungsbeispiels.
- Figur 2:: Eine Draufsicht eines ersten Ausführungsbeispiels.
- Figur 3:: Eine Seitenansicht eines zweiten Ausführungsbeispiels.
- Figur 4:: Eine Draufsicht eines zweiten Ausführungsbeispiels.
- Figur 5:: Eine Seitenansicht eines dritten Ausführungsbeispiels.
- Figur 6:: Eine Draufsicht eines dritten Ausführungsbeispiels.
- Figur 7:: Eine Seitenansicht eines vierten Ausführungsbeispiels.
- Figur 8:: Eine Draufsicht eines vierten Ausführungsbeispiels.
- Figur 9:: Eine Seitenansicht eines fünften Ausführungsbeispiels.
- Figur 10:: Eine Draufsicht eines fünften Ausführungsbeispiels.
- Figur 11:: Eine Seitenansicht eines sechsten Ausführungsbeispiels.
- Figur 12:: Eine Draufsicht eines sechsten Ausführungsbeispiels.

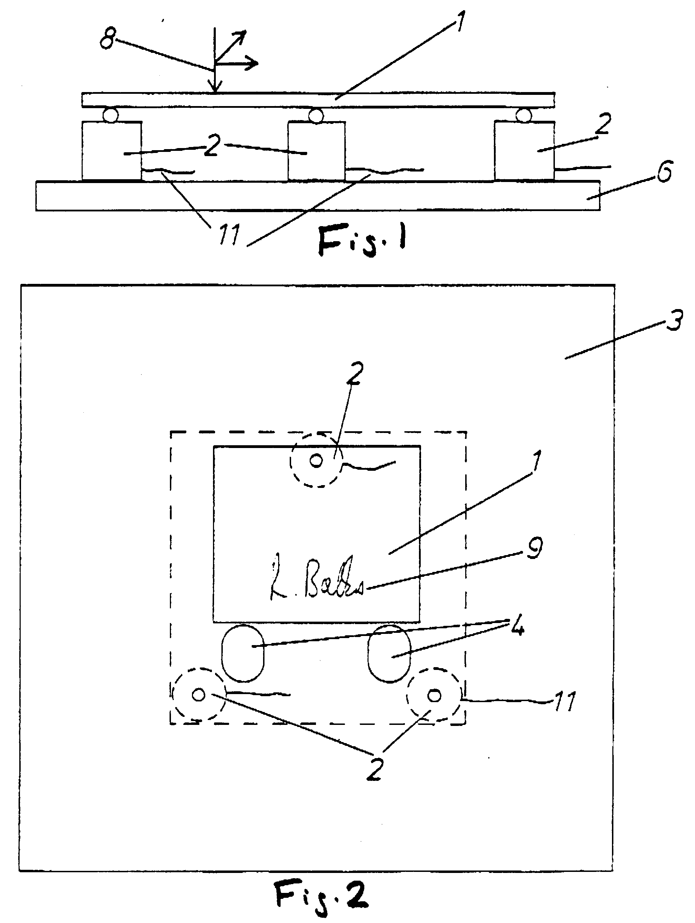

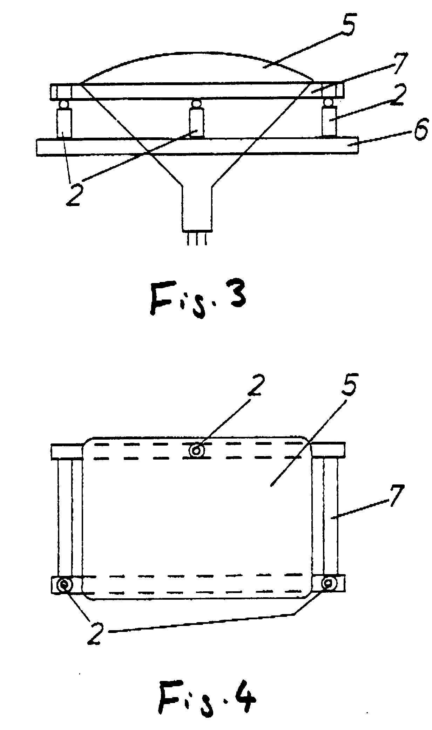

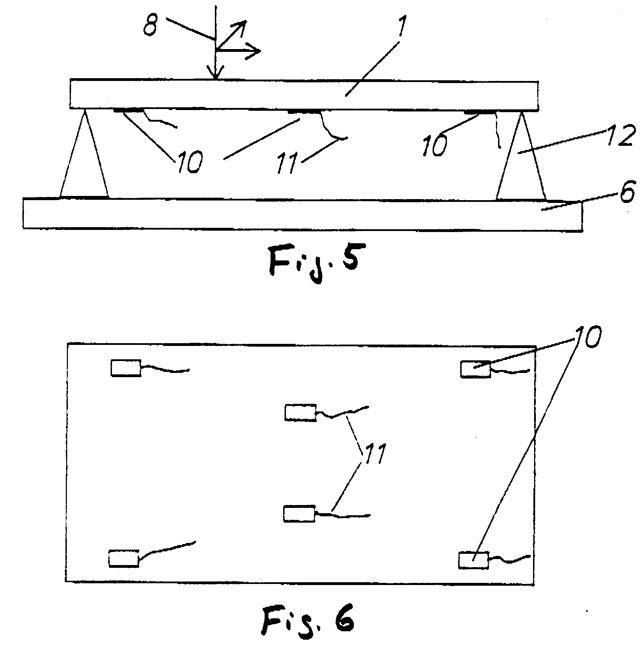

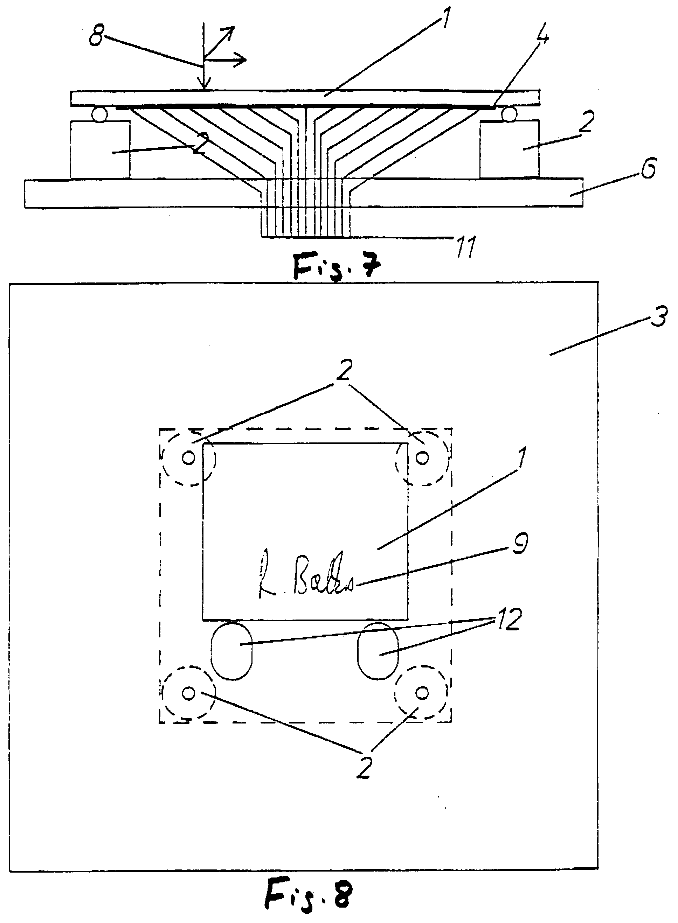

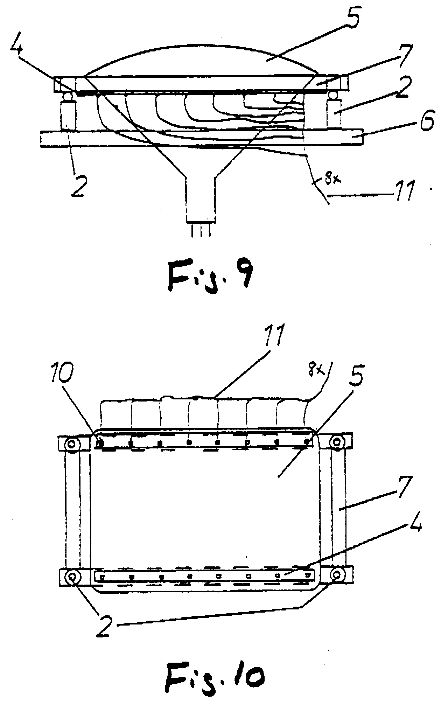

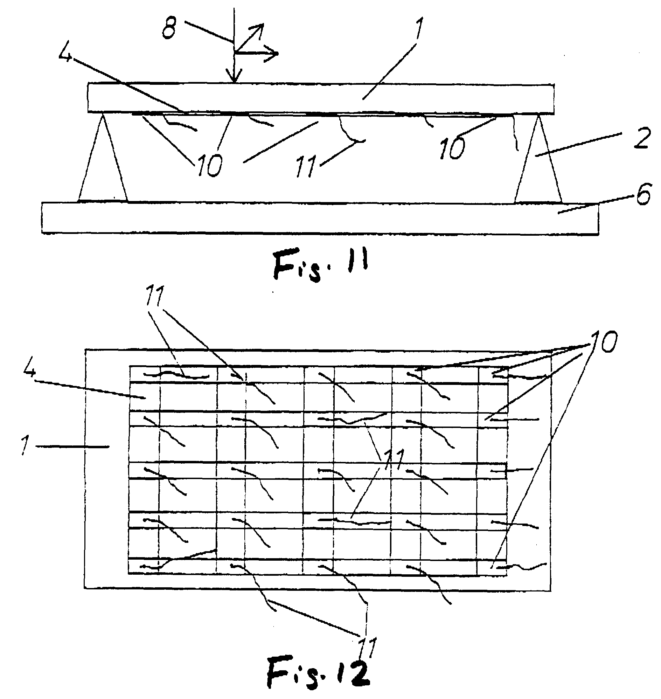

Die drei Ausführungsbeispiele nach Figur 1 bis 6 verdeutlichen die Funktion des Schriftprüfers. Im ersten Ausführungsbeispiel nach Figur 1 und 2 ist die Platte 1 auf drei Wägezellen-Kraftaufnehmern 2 gelagert. Diese stehen auf einer festen Unterlage 6. Wird aus verschiedenen Richtungen 8 Druck auf die Platte 1 ausgeübt, wirkt dieser in unterschiedlicher Intensität an den Wägezellen-Kraftaufnehmern 2. Die dann entstehenden kraft- und druckproportionalen elektrischen Signale werden über die Kabelverbindungen 11 an die Elektronik zur weiteren Verarbeitung geleitet. Die Platte 1 ist in eine Abdeckung 3 eingelassen und in allen Richtungen frei beweglich. Die Abdeckung 3 besitzt zwei Vertiefungen 4, die beim Schreiben die Hand fixieren. Die Schriftprobe 9 erfolgt somit annähernd in der Mitte der Platte 1.

Das zweite Ausführungsbeispiel nach Figur 3 und 4 zeigt den in dem Tragrahmen 7 eingebauten Bildschirm 5. Unterhalb des Tragrahmens 7 sind drei Wägezellen-Kraftaufnehmer 2 angeordnet. Diese wiederum stehen auf der festen Unterlage 6. Das Ganze kann wie im ersten Beispiel mit einer Abdeckung 3 versehen werden.

Das dritte Ausführungsbeispiel nach Figur 5 und 6 zeigt die Platte 1, an deren Unterseite sechs Dehnungsmeßstreifen 10 aufgeklebt sind. Die Platte 1 ist auf Trägern 12 aufgelegt. Die während des Schreibens auftretenden Kraft- und Druckverläufe 8 verbiegen die Platte 1. Diese Verbiegungen werden in den Dehnungsmeßstreifen in proportionale elektrische Signale umgewandelt und in Auswertelektronik verarbeitet.

Die drei Ausführungsbeispiele nach Figur 7 bis 12 unterscheiden sich von den vorherigen dadurch, daß an der Unterseite der Platte 1 ein Piezo-Array 4 aufgeklebt ist. die Platte 1 ist auf Trägern 2 aufgelegt. Die während des Schreibens auftretenden Kraft- und Druckverläufe 8 verbiegen die Platte 1. Das gleiche Prinzip findet Anwendung bei dem Rahmen 7, in dem ein Bildschirm gelagert ist. Die auftretenden Verbiegungen werden in dem Piezo-Array 4 in Druck- oder Kraftproportionale elektrische Signale umgewandelt, in eine Auswertelektronik verarbeitet und zur weiteren Verwendung zur Verfügung gestellt.

Die Platte oder der Rahmen sind so mit einem Piezo-Array, wie in DE 37 29 409 A1 beschreiben, versehen, daß die beim Schreiben entstehenden dreidimensionalen Kraft- und Druckverläufe in auswertbare elektrische Signale umwandelbar sind. Eine Piezofolie ist eine sehr preiswerte, aktive Signalquelle und erfordert außer Ladungsverstärker keine weitere Elektronik, wie z.B. Spannungsversorgung und Meßbrücken. Besonders die Einsparung von teuren Einzelsensoren ist vorteilhaft. Mittels einer Piezofolie sind individuelle Sensorstrukturen mit praktisch unbegrenzter Sensorzahl realisierbar. Gegenüber herkömmlichen Systemen sind sehr feinfühlige und informationsreiche Auswertungen möglich.

Durch eine nachgeschaltete Elektronik sind die Singnale auf Datenträger übertragbar und bei erneutem Gebrauch vergleichbar. Stimmen die aktuellen Signale mit den gespeicherten überein, sind weitere Funktionen auslösbar; ist dies nicht der Fall, sind Funktionen sperrbar.

## Patentansprüche

1. Vorrichtung zum Verifizieren von Unterschriften, durch Messen, Speichern und Auswerten der Drücke und Druckänderungen, den die schreibende Person durch ein Schreibinstrument auf einer Schreibfläche in der Ebene der Schreibfläche (X- und Y-Richtung) erzeugt, **dadurch gekennzeichnet**, daß (a) die Schreibfläche (1, 5) oder Schreibunterlage so gestaltet ist, daß über den Schreibdruck die x-y-Koordinaten des Schriftzuges erfaßt werden können, und (b) die punktuell auftretenden Kräfte, wie sie zur manuellen Signalgebung benutzt werden, erfaßt und ausgewertet werden.

2. Vorrichtung nach Anspruch 1, **dadurch gekennzeichnet**, daß als Schreibfläche/-unterlage eine Platte (1) oder Bildschirm (5) so auf drei oder mehr Kraftaufnehmern (2) gelagert ist, daß die beim Schreiben auf der Platte (1) oder auf dem Bildschirm (5) entstehenden, personentypischen, unveränderbaren, Druckverläufe (8) von den Druckaufnehmern (2) erfaßbar, in ein elektrisches Signal umformbar und in einer elektronischen Schaltung auswertbar sind.

3. Vorrichtung nach Anspruch 1 oder 2, **dadurch gekennzeichnet**, daß die Schreibfläche/unterlage zum Erfassen der Drücke Dehnungsmeßstreifen aufweist.

4. Vorrichtung nach Anspruch 2, **dadurch gekennzeichnet**, daß die Platte (1) oder der Bildschirm (5) in einer festliegenden Abdeckung (3) eingelassen ist und die Platte (1) und der Bildschirm (5) mit Traggestell (7) freibeweglich sind.

5. Vorrichtung nach einem der vorherigen Ansprüche, **dadurch gekennzeichnet**, daß die ausgewerteten Signale der Kraft- und Druckverläufe in einer elektronischen Schaltung gespeichert und auf einem Datenträger, zum Beispiel auf einen Magnetstreifen, übertragbar sind.

6. Vorrichtung nach Anspruche 5, **dadurch gekennzeichnet**, daß die auf dem Datenträger, zum Beispiel auf einem Magnetstreifen, gespeicherten und mit einem Datenleser, z.B. einen Magnetstreifenleser gelesenen Daten sofort mit den während des Schreibens entstehenden und in einer elektronischen Schaltung ausgewerteten Kraft- und Druckverläufe vergleichbar sind.

7. Vorrichtung nach Anspruche 6, **dadurch gekennzeichnet**, daß bei Übereinstimmung der ausgewerteten Kraft- und Druckverläufe und der auf dem Datenträger gespeicherten Daten weitere Funktionen auslösbar sind.

8. Vorrichtung nach einem der vorherigen Ansprüche 6 und 7, **dadurch gekennzeichnet**, daß bei Nichtübereinstimmung der ausgewerteten Kraft- und Druckverläufe und der auf dem Datenträger gespeicherten Daten weitere Funktionen sperrbar sind.

9. Vorrichtung nach einem der vorherigen Ansprüche, **dadurch gekennzeichnet**, daß unter der Schreibfläche ganz oder teilweise ein linien-, raster-, oder matrixförmiges Piezo-Array aus Piezofolie so aufgebracht ist, daß die beim Schreiben auf der Schreibfläche (1) entstehenden und sich als Durchbiegungen darstellenden, dynamischen, personentypischen, unveränderbaren, Kraft- und Druckverläufe (8) und Materialverformungen von dem Piezo-Array aufnehmbar, in ein elektrisches Signal umformbar, in einer elektronischen Schaltung auswertbar und speicherbar sind.

## Claims

1. A device for the verification of signatures by the measuring, storage and evaluation of the pressures and changes in pressure which the writing person generates by a writing instrument on a writing surface in the plane of the writing surface (X and Y directions), characterized in that (a) the writing surface (1, 5) or writing support is so designed that the x-y coordinates of the handwriting can be detected via the writing pressure, and (b) the forces occurring at points, such as are used for manual signal transmission, are detected and evaluated.

2. A device according to claim 1, characterized in that the writing surface/support is a plate (1) or image screen (5) so mounted on three or more force transducers (2) that the unalterable courses of pressure (8) typical of the person and produced on the plate (1) or image screen (5) can be detected by the pressure transducers (2), converted into an electric signal and evaluated in an electronic circuit.

3. A device according to claims 1 or 2, characterized in that the writing surface/support has strain gauges for detecting the pressures.

4. A device according to claim 2, characterized in that the plate (1) or image screen (5) is let into a fixed cover (3) and the plate (1) and image screen (5) with supporting frame (7) are freely movable.

5. A device according to one of the preceding claims, characterized in that the evaluated signals of the courses of force and pressure are stored in an electronic circuit and can be transmitted to a data carrier, for example, a magnetic strip.

6. A device according to claim 5, characterized in that the data stored on the data carrier, for example, a magnetic strip and read by a data reader, for example, a magnetic strip reader can be immediately compared with the courses of force and pressure occurring during writing and evaluated in an electronic circuit.

7. A device according to claim 6, characterized in that further functions can be triggered when the evaluated courses of force and pressure agree with the data stored on the data carrier.

8. A device according to one of claims 6 and 7, characterized in that further functions can be blocked if the courses of force and pressure evaluated do not agree with the data stored on the data carrier.

9. A device according to one of the preceding claims, characterized in that a linear, grid-shaped or matrix-shaped piezo array of piezo foil is so applied wholly or partially below the writing surface that the dynamic, unalterable courses of force and pressure (8) occurring during writing on the writing surface (1) and taking the form of through bends, and deformations of the material of the piezo array can be recorded, converted into an electric signal, evaluated in an electronic circuit and stored.

## Revendications

1. Dispositif de vérification de signatures par mesure, mémorisation et évaluation des pressions et modifications de pression qu'engendre la personne qui écrit, au moyen d'un instrument d'écriture, sur une surface d'écriture dans le plan de la surface d'écriture (direction X et Y), caractérisé en ce que
a) la surface d'écriture (1, 5) ou support d'écriture est formé de telle manière que les coordonnées x-y du trait d'écriture peuvent être engendrées par la pression d'écriture et
b) les forces produites ponctuellement, telles qu'elles sont utilisées pour la signalisation manuelle, sont détectées et évaluées.

2. Dispositif selon la revendication 1,
caractérisé en ce que, en tant sur surface/support d'écriture, une plaque (1) ou un écran (5) est monté sur trois capteurs de force (2) ou plus de telle manière que les variations de pression (8) non modifiables, typiques de la personne, qui se produisent lors de l'écriture sur la plaque (1) ou sur l'écran (5) peuvent être détectées par les capteurs de pression (2), être transformées en un signal électrique et être évaluées dans un circuit électronique.

3. Dispositif selon la revendication 1 ou 2,
caractérisé en ce que la surface/le support d'écriture présente des bandes de mesure d'allongement pour détecter les pressions.

4. Dispositif selon la revendication 2,
caractérisé en ce que la plaque (1) ou l'écran (5) est emboîté dans une couverture fixe (3) et la plaque (1) et l'écran (5) sont mobiles librement avec un châssis de support (7).

5. Dispositif selon l'une des revendications précédentes,
caractérisé en ce que les signaux évalués des variations de force et de pression sont mémorisées dans un circuit électronique et peuvent être transférés sur un support de données, par exemple sur une bande magnétique.

6. Dispositif selon la revendication 5,
caractérisé en ce que les données mémorisées sur un support de données, par exemple une bande magnétique, et lues par un lecteur de données, par exemple un lecteur de bandes magnétiques, peuvent être immédiatement comparées aux variations de force et de pression engendrées pendant l'écriture et évaluées dans un circuit électronique.

7. Dispositif selon la revendication 6,
caractérisé en ce que, en cas de coïncidence entre les variations de force et de pression évaluées et les données mémorisées sur le support de données, d'autres fonctions peuvent être déclenchées.

8. Dispositif selon l'une des revendications précédentes 6 et 7,
caractérisé en ce que, en cas de non-coïncidence entre les variations de force et de pression évaluées et les données mémorisées sur le support de données, d'autres fonctions peuvent être bloquées.

9. Dispositif selon l'une des revendications précédentes,
caractérisé en ce qu'un réseau piézo en une feuille piézo, en forme de lignes, de trame ou de matrice, est disposé sous la surface d'écriture, totalement ou partiellement, de telle manière que les variations de force et pression (8) et déformations de matière non modifiables, typiques de la personne, dynamiques, engendrées lors de l'écriture sur la surface d'écriture (1) et se présentant sous forme de fléchissements peuvent être enregistrées par le réseau piézo, être transformées en un signal électrique, être évaluées dans un circuit électronique et être mémorisées.
